# EUROPEAN PATENT APPLICATION

(11) **EP 2 642 250 A2**
(43) Date of publication of application: **25.09.2013**
(21) Application number: 13150622.2
(22) Date of filing: 09.01.2013
(51) Int. Cl.: G01C 21/36, G08G 1/16

(54) **Method for displaying background screen in navigation device**

(30) Priority: 23.03.2012 KR 20120029674
(71) Applicant: Humax Co., Ltd., Seongnam-si, Gyeonggi-do 463-825 (KR)
(72) Inventor: Choi, Seokhoon, Seoul 134-070 (KR)
(74) Representative: Vossius & Partner

(57) **Abstract**

When a vehicle is driving, a camera image can be selected that photographing a front or other direction of a vehicle in real time to display the selected image on a background screen of a menu screen in a navigation device. In addition, selection buttons of the menu screen is displayed to be transparent or translucent. Since a driver can keep eyes a moving direction of the vehicle while manipulating a navigation device, possible accidents of the vehicle can be prevented in advance.

## Description

The document relates to a method for displaying a background screen in a navigation device, and in particular to a method for displaying a camera image photographed in real time on the background screen in the navigation device.

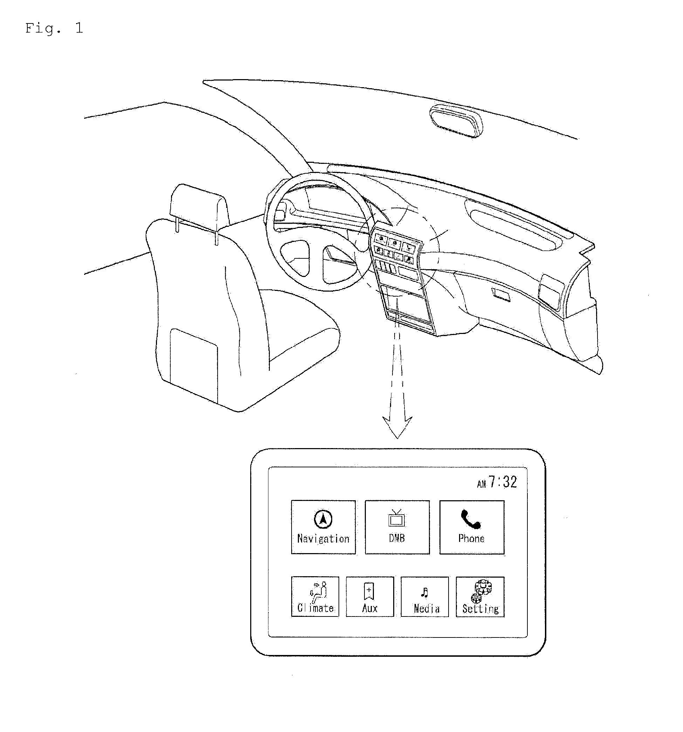

A navigation device finds a current location of a vehicle using a GPS signal to display the location on a map and displays an image of a driving path for a destination. For example, the navigation device may mounted on a center of the vehicle, that is, a right side of a driver, as shown in FIG. 1, and may provide a variety of additional information such as a gas station, a government office, a restaurant and the like in the surrounding area.

An audio video navigation (AVN) device, which is a navigation device interconnected with a vehicle control device, will display a variety of user-selectable menus such as a navigation, a DMB, a phone, climate, an Aux, a media, a setting and the like on a graphic menu screen, as shown in FIG. 1. Accordingly, a driver can easily perform a desired function, or can check desired information by simply touching selection menus displayed on the menu screen of the navigation device through the driver's hand.

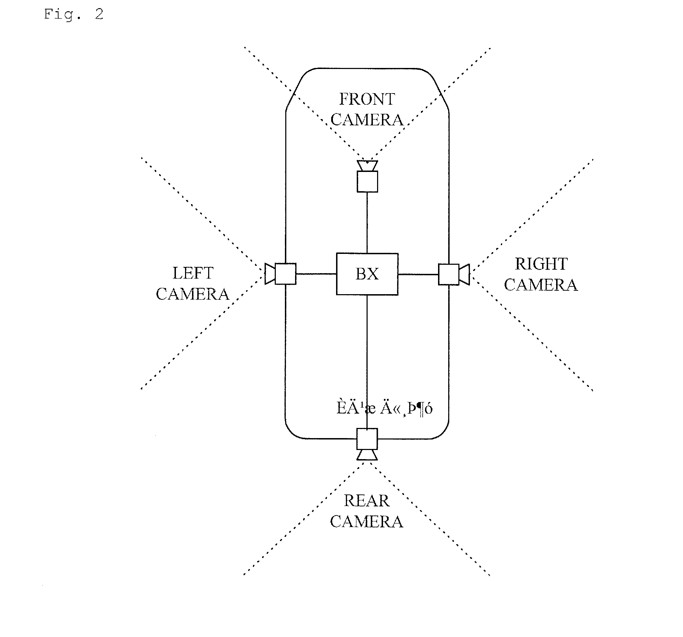

In recent years, in order to confirm causes of a vehicle accident, a black box for a vehicle has come into wide use. For example, the causes of a vehicle accident will be clearly confirmed by recording images of cameras mounted on front, rear, left and right sides of the vehicle on a storage media in real time, as shown in FIG. 2.

For reference, the front camera may be provided on a rear side of a room mirror installed in the vehicle to photograph a front direction of the vehicle in real time, and the rear camera may be provided on a handle part of a truck of the vehicle to photograph a rear direction of the vehicle in real time.

Since such a navigation device is provided with multiple functions, it is not easy to operate a desired function in a single operation by a driver. In particular, the driver could be very dangerous because the driver cannot see the moving direction of the vehicle momentarily while manipulating the navigation device away from a steering wheel on driving.

In the light of this problem, the present invention has been made in an effort to provide a display method by which a driver can keep eyes a moving direction of the vehicle while manipulating a navigation device.

According to an exemplary embodiment of the present invention, a method for displaying a background screen in a navigation device is provided that may include receiving a camera image photographed in real time, and displaying the camera image on a background screen of a menu screen when a vehicle is driving.

According to another exemplary embodiment of the present invention, a navigation device is provided that may include an interface unit to receive a camera image, a display unit to display a menu screen, and a control unit to control such that the camera image is displayed on a background screen in the menu screen.

In an exemplary embodiment of the present invention, the control unit may be configured to control such that the camera image is displayed on the background screen in the menu screen when a display of the menu screen is requested, or the menu screen of the display unit is touched in a state where a vehicle is driving.

In an exemplary embodiment of the present invention, the control unit may be configured to determine a state where a vehicle is driving, based on a gear state or speed of the vehicle that transmitted through the interface, or a GPS signal or an output of a sensor in the navigation device.

In an exemplary embodiment of the present invention, the control unit is configured to control such that the camera image corresponding to a driving direction of the vehicle is selected and is selected and displayed on the background screen in the menu screen.

In an exemplary embodiment of the present invention, the control unit may be configured to determine the driving direction of the vehicle, based on a gear state or speed of the vehicle that transmitted through the interface, or a GPS signal or an output of a sensor in the navigation device.

In an exemplary embodiment of the present invention, the control unit is configured to control such that a selection button of the menu screen may be displayed to be transparent or translucent when the camera image is displayed on the background screen in the menu screen.

In an exemplary embodiment of the present invention, the control unit may be configured to control such that only a portion in a frame of the camera image is displayed on the background screen in the menu screen.

In an exemplary embodiment of the present invention, the control unit may be configured to control such that the camera image is displayed on a PIP or P&P screen when the menu screen is displayed on a sub-screen.

In an exemplary embodiment of the present invention, the camera image may be input from a camera for a black box that photographs front or other directions of the vehicle in real time.

The features and advantages described in this summary and the following detailed description are not intended to be limiting. Many additional features and advantages will be apparent to one of ordinary skill in the art in view of the drawings, specification and claims.

FIG. 1 is a diagram illustrating a menu screen of a navigation device;

FIG. 2 is a diagram illustrating a state in which a plurality of cameras is connected to a black box for a vehicle;

FIG. 3 is a configuration diagram illustrating a navigation device in which the present invention is applied;

FIG. 4 is a diagram illustrating that an image of a front camera is displayed on a background screen of a menu screen in accordance with an exemplary embodiment of the present invention;

FIG. 5 is an operation flow chart illustrating a method for displaying a background screen in a navigation device in accordance with the exemplary embodiment of the present invention;

FIG. 6 is a diagram illustrating that a portion of an image of a front camera image is displayed in accordance with an exemplary embodiment of the present invention;

FIG. 7 is a diagram illustrating that a image of a front camera is displayed in a form of a PIP in accordance with an exemplary embodiment of the present invention; and

FIG. 8 is a diagram illustrating that a image of a front camera is displayed in a form of a P&P in accordance with an exemplary embodiment of the present invention.

The invention will be described more fully hereinafter with reference to the accompanying drawings, in which example embodiments of the inventions are shown. This invention may, however, be embodied in many different forms and should not be construed as limited to the embodiments set forth herein. Like reference numerals designate like elements throughout the specification. In the following description, if it is decided that the detailed description of known function or configuration related to the invention makes the subject matter of the invention unclear, the detailed description is omitted.

Hereinafter, a method for displaying a background screen in a navigation device in accordance with an exemplary embodiment of the present invention will be described in detail with reference to the accompanying drawings.

First of all, the present invention can be applied to, for example, a navigation device mounted on a vehicle to provide a variety of menus and functions, as described with reference to FIG. 1, and the navigation device may include an AVN device, a Car Infotainment device or the like.

In addition, in the navigation device applied by the present invention, a camera image of a front or other direction used in a black box for a vehicle may be displayed on a background screen of menu screen, but a camera for photographing the front or other direction may be separately mounted and used, regardless of the black box for the vehicle.

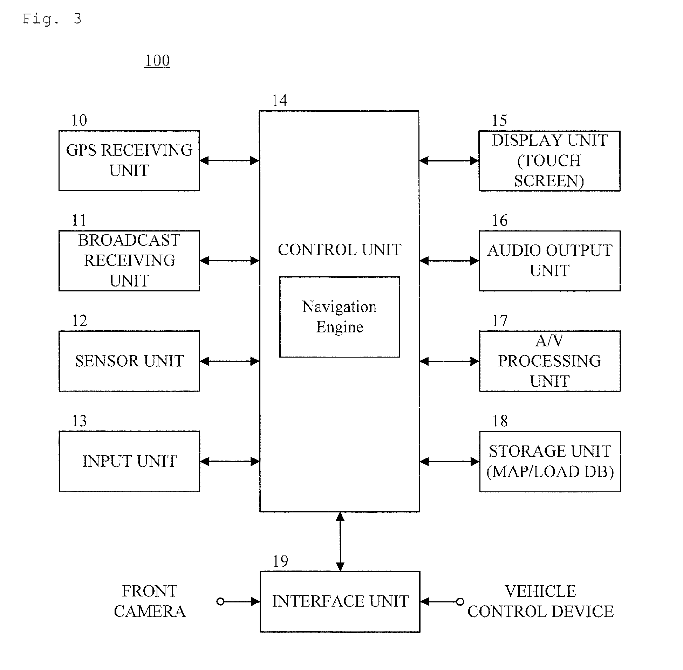

In addition, the navigation device may include, for example, a GPS receiving unit 10, a broadcast receiving unit 11, a sensor unit 12, an input unit 13, a control unit 14, a display unit 15, an audio output unit 16, an A/V processing unit 17, a storage unit 18, an interface unit 19 and the like, as shown in FIG. 3.

For example, a vehicle control device that monitors and controls a gear state and speed of the vehicle may be connected to the interface unit 19. In addition, a front camera, other directional camera, or the like of the black box for the vehicle may be connected to the interface unit 19.

The control unit 14 may be provided with a navigation engine that finds a current location of the vehicle using a GPS signal received through the GPS receiving unit 10, reads out a map and a road image stored in the storage unit 18, and display it on the display unit 15.

In addition, for example, a tough screen may be used as the input unit 13 and the display unit 15, and a video screen to be processed by the A/V processing unit 17, a menu screen for a user selection and the like may be displayed on the display unit 15.

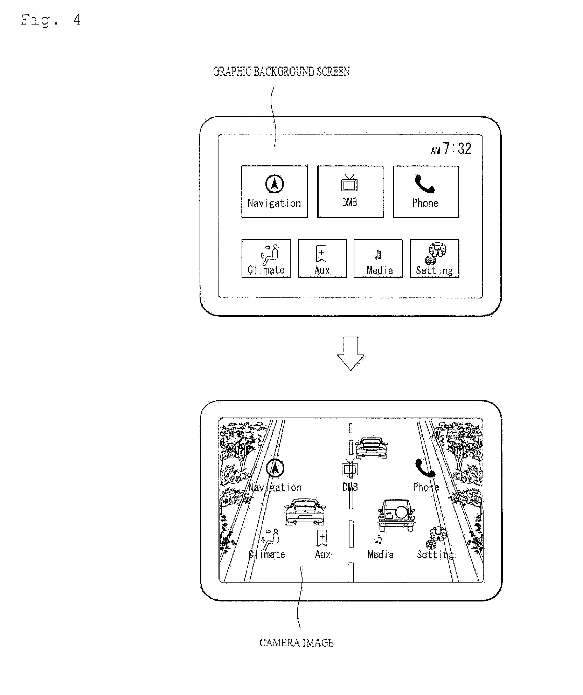

The control unit 14 may control such that, for example, on driving, that is, while the vehicle is moving, or either when the vehicle is driving forward or backward, if the menu screen is selected, or the touch screen of the display unit 15 is touched by a driver's hand in a state where the menu screen is displayed, as shown in FIG. 4, the image of the front camera connected through the interface unit 19 is displayed on the background of the menu screen.

In addition, the control unit 14 controls such that the A/V processing unit 17 is controlled, and the selection buttons displayed on the menu screen are changed and displayed from an opaque state to either a transparent or translucent state. Accordingly, the driver can be able to keep an eye on the front of the vehicle even while the navigation device is operated during on driving. With regard to this, it will be described in detail as follows.

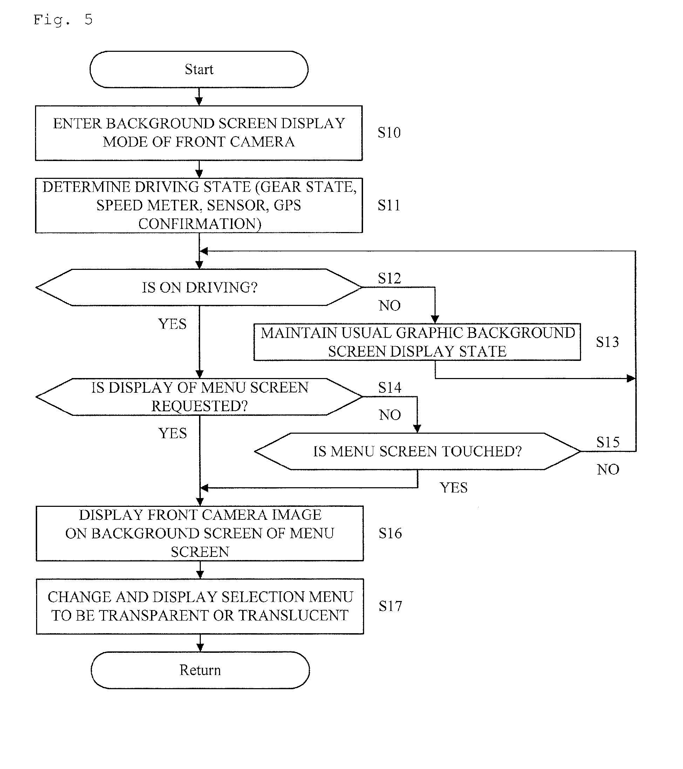

FIG. 5 is an operation flow chart illustrating a method for displaying a background screen in a navigation device in accordance with the exemplary embodiment of the present invention.

For example, the control unit 14 may be configured to optionally set a background screen display mode of the front camera depending on a request of a driver or user (S10). As shown in FIG. 1, if a setting menu item displayed on the graphic menu screen is selected, a sub-menu item is displayed that is to specify whether image to be captured by the front camera is displayed on the background screen, and the background screen display mode of the front camera is set depending on a selection of the user.

In addition, if the background screen display mode of the front camera is set as described above, the control unit 14 will determine whether the vehicle is driving (S11). In this case, the control unit 14 will determine that the vehicle is driving if a current gear state of the vehicle is a driving state, or in a case of the driving state by which driving speeds are higher than 0 (zero) by communicating with a vehicle control device connected through the interface unit 19.

In addition, the control unit 14 may decide whether a vehicle is driving according to a change of the current location of the vehicle identified using a GPS signal and an output signal of an acceleration sensor or the like in the sensor 12. As a result, if the vehicle is not driving (S12), as shown in FIG. 4, a usual graphic background screen display state is maintained (S13). When the vehicle is driving, if displaying of the menu screen is requested (S14), or the touch screen of the display unit 15 is touched by a driver's hand in a state where the menu screen has been displayed (S15), the control unit 14 controls the A/V processing unit 17 so as to output the image of the front camera connected through the interface unit 19 to the background screen of the menu screen (S16).

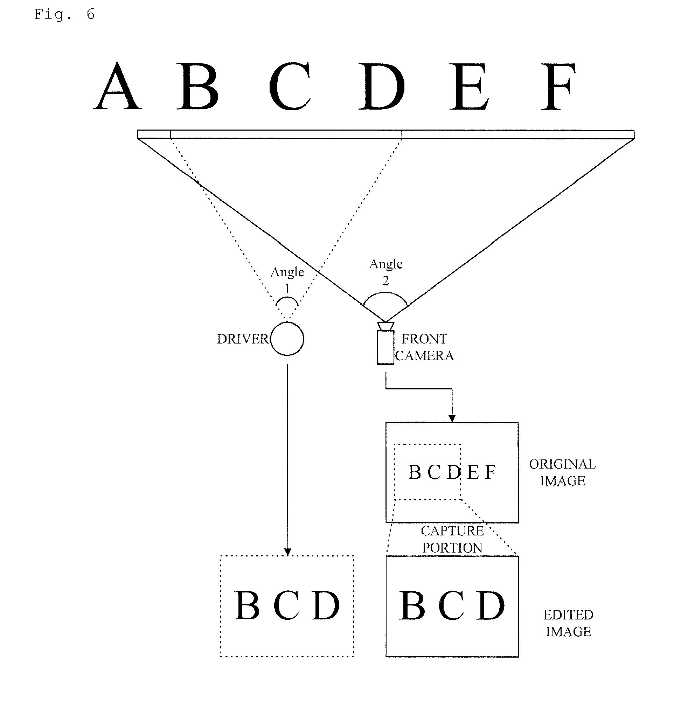

For example, as shown in FIG. 6, a photographing angle (Angle 2) of the front camera photographing with a main purpose of monitoring is larger a front angle (Angle 1) that a driver keeps eyes forward in priority (Angle 2 > Angle 1).

Accordingly, the control unit 14 controls the A/V processing unit 17, such that only some areas, which is set in advance, are partially captured among original images photographed by the front camera, and the captured image is similarly edited with the image of the front angle watched by the driver, thereby capable of displaying it on the background screen of the menu screen.

As shown in FIG. 6, the driver keeps eyes only subjects B to D in priority among multiple subjects A to F in the front of the vehicle. On the other hand, if the subjects B to F are photographed with large angles by the front camera, the A/V processing unit 17 may captures only a portion of original images of the front camera to display the background screen similar to the image watched by the driver. Accordingly, an effect in that the driver keeps eyes forward in succession can be improved.

In addition, the A/V processing unit 17 may change an opaque selection buttons displayed on the menu screen to a transparent or translucent state according to controls of the control unit 14 (S17). Accordingly, it is possible to minimize that the image of the front camera to be displayed on the background screen is covered with a plurality of selection buttons.

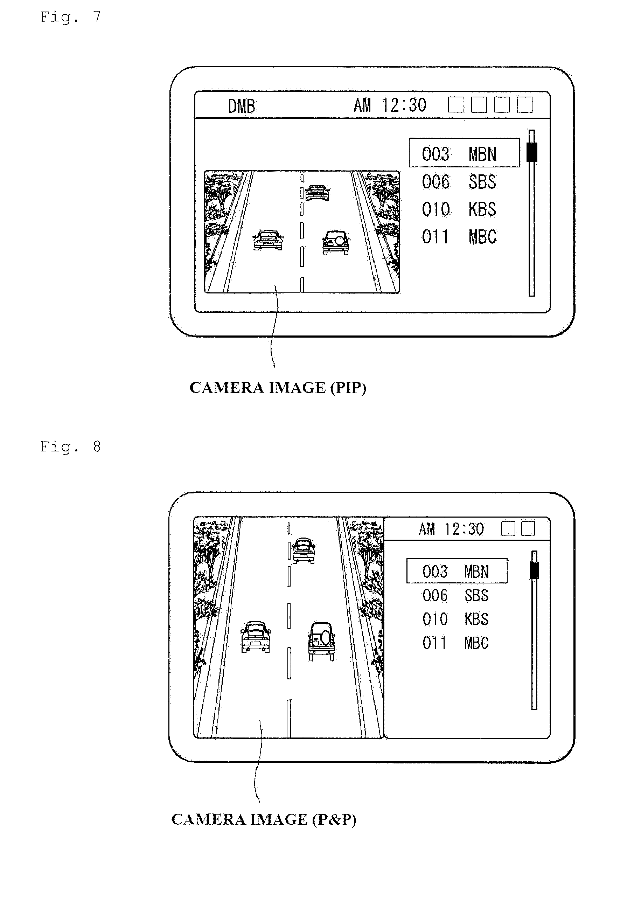

If the sub-menu screen is displayed, the control unit 14 may control such that the image of the front camera and the sub-menu screen(for example, DMB) are displayed in the form of a picture in picture (PIP) as shown in FIG. 7, or displayed in the form of a picture and picture (P&P) as shown in FIG. 8. Accordingly, even while the driver selects the sub-menu item, the driver can keep eyes images being photographed by the front camera, thereby capable of preventing possible accidents of the vehicle in advance.

For reference, while the image of the front camera is displayed on the background screen, the selection buttons to be displayed on the menu screen may be changed and displayed in a simplified form, unlike the screen buttons when a common graphic background screen is displayed. In addition, the image of the front camera can be also displayed on the background screen of the menu screen.

Meanwhile, the vehicle is on backing, a rear camera image corresponding to a moving direction of the vehicle is displayed on the background screen of the menu screen. In this case, the control unit 14 may decide the moving direction of the vehicle based on information about the vehicle transmitted from the vehicle control device through the interface unit 19. The camera images corresponding to the moving directions of the vehicle, for example, the front camera image in a case where the vehicle is driving forward, or the rear camera image in a case where the vehicle is driving backward, are selected to output the selected image to the background screen of the menu screen.

In addition, the control unit 14 may decide moving directions about whether the vehicle is driving forward or backward based on a GPS signal or an output signal of the sensor unit 12, or decide moving directions of the vehicle by analyzing images of the front camera or rear camera.

Therefore, since a driver can manipulate the navigation device while keeping eyes a moving direction of a vehicle, possible accidents of the vehicle can be prevented in advance.

Although the embodiments have been described with reference to a number of illustrative embodiments thereof, it should be understood that numerous other modifications and embodiments can be devised by those skilled in the art that will fall within the scope of the principles of this disclosure.

## Claims

1. A navigation device comprising:
an interface unit to receive a camera image;
a display unit to display a menu screen; and
a control unit configured to control such that the camera image is displayed on a background screen in the menu screen.

2. The navigation device according to claim 1, wherein the control unit is configured to control such that the camera image is displayed on the background screen in the menu screen when a display of the menu screen is requested or the menu screen of the display unit is touched in a state where a vehicle is driving.

3. The navigation device according to claim 2, wherein the control unit is configured to determine a state where a vehicle is driving, based on a gear state or speed of the vehicle that transmitted through the interface, or a GPS signal or an output of a sensor in the navigation device.

4. The navigation device according to claim 1, 2, or 3 wherein the control unit is configured to control such that the camera image corresponding to a driving direction of the vehicle is selected and displayed on the background screen in the menu screen.

5. The navigation device according to claim 4, wherein the control unit is configured to determine the driving direction of the vehicle, based on a gear state or speed of the vehicle that transmitted through the interface, or a GPS signal or an output of a sensor in the navigation device.

6. The navigation device according to any one of claims 1 to 5, wherein the control unit is configured to control such that a selection button of the menu screen is displayed to be transparent or translucent when the camera image is displayed on the background screen in the menu screen.

7. The navigation device according to any one of claims 1 to 6, wherein the control unit is configured to control such that only a portion in a frame of the camera image is displayed on the background screen in the menu screen.

8. The navigation device according to any one of claims 1 to 7, wherein the control unit is configured to control such that the camera image is displayed on a PIP or P&P screen when the menu screen is displayed on a sub-screen.

9. The navigation device according to any one of claims 1 to 8, wherein the camera image is inputted from a camera for a black box that photographs front or other directions of the vehicle in real time.

10. A method for displaying a background screen in a navigation device, comprising:
receiving a camera image photographed in real time, and
displaying the camera image on a background screen of a menu screen when a vehicle is driving.

11. The method according to claim 10, wherein the displaying selects and display a camera image corresponding to a driving direction of the vehicle on the background screen in the menu screen.

12. The method according to claim 11, further comprising:
determining a driving state and/or the driving direction of the vehicle, based on a gear state or speed of the vehicle that transmitted through an interface, or a GPS signal or an output of a sensor in the navigation device.

13. The method according to claim 10, 11, or 12 wherein the displaying displays a selection button of the menu screen to be transparent or translucent.

14. The method according to any one of claims 10 to 13, wherein the displaying displays only a portion area in a frame of the camera image on the background screen in the menu screen.

15. The method according to any one of claims 10 to 14, wherein the displaying displays the camera image on a PIP or P&P screen when the menu screen is displayed on a sub-screen.
